# EUROPEAN PATENT APPLICATION

(11) **EP 3 416 133 A1**
(43) Date of publication of application: **19.12.2018**
(21) Application number: 17176363.4
(22) Date of filing: 16.06.2017
(51) Int. Cl.: G06T 7/20

(54) **A METHOD FOR PREDICTING A CURRENT POSITION OF A BODY PART, COMPUTER PROGRAM PRODUCT AND SYSTEM FOR PREDICTING THE CURRENT POSITION OF A BODY PART**

(71) Applicant: Siemens Healthcare GmbH, 91052 Erlangen (DE)
(72) Inventor: GRODZKI, David, 91054 Erlangen (DE); HENGERER, Arne, 91096 Möhrendorf (DE); SCHMIDT, Sebastian, 91085 Weisendorf (DE)

(57) **Abstract**

A method for predicting a current position of a body part, computer program product and system for predicting the current position of a body part

The present invention suggests a method for predicting (20) a current position of a body part (26) comprising the steps:
∘ recording a medical image (12) of the body part (26) and a first reference data set (14),
∘ correlating (16) the medical image (12) of the body part (26) and the first reference data set (14),
∘ recording a second reference data set (18) and predicting (20) the current position of the body part (26) based on the second reference data set (18) and the correlation of the medical image (12) of the body part (26) and the first reference data set (14).

## Description

The present invention describes a method for predicting a current position of a body part, a computer program product as well as a system for predicting the current position of a body part.

For reducing an irradiation exposure to a patient, it is necessary to know an exact position of an inner body part, which is treated. Therefore, sophistic techniques and/or methods for recording a medical image determining the position of an inner body part have been developed. Such techniques and/or methods are computer-tomography (CT) methods or magnetic nuclear resonance (MNR) methods, for example. These techniques and/or methods are exemplarily described in US 20150077108 A1, US 20140086468 A1 or US 20080021304 A1. However, these methods cannot guarantee that the position of the specific body part that is treated does not change during the irradiation therapy. As a consequence, another body part might be at least temporarily irradiated accidently. Therefore, it might be helpful to know the current position of the body part during the irradiation.

However, measuring the current position of the body and treating the body part by irradiation simultaneously would expose the patient in two ways to radiation, namely the irradiation for recording a medical image and the radiation of the irradiation therapy itself.

It is an object of the present invention to present a method, in particular for irradiation treatment, which eliminates the disadvantages, which have just been mentioned.

The object is solved by a method according to claim 1, by a computer program product according to claim 13 and a system according to claim 14.

According to a first aspect of the present invention, a method for predicting a current position of a body part is provided, comprising the steps:
∘ recording a medical image of the body part and a first reference data set in a first time interval;
∘ correlating the medical image of the body part and the first reference data set;
∘ recording a second reference data set in a second time interval; and
∘ predicting the current position of the body part in the second time interval based on
   - the second reference data set and
   - the correlation of the medical image of the body part and the first reference data set.

In other words, a medical image and a first reference data set are simultaneously recorded. Subsequently, an information about the position of the body part based on the medical image and the first reference data are associated to each other for predicting the current position in the second time interval. Thus, it is advantageously possible to measure the second reference data set in the second time interval and predict the current position based on the learned correlation between the medical image and the first reference data set. Preferably, the current position of the body part is predicted without measuring another medical image in the second time interval. The medical image of the body part as well as the first and second reference data set are preferably recorded individually for one patient resulting in individual correlations and predictions of the body part. As a consequence, the radiation exposure can be limited without losing the information about the current position of the body part. In particular, the prediction of the current position of the body part comprises the position, which is advantageously expressed in a coordinate system comprising three axes, e.g. a Cartesian coordinate system. Furthermore, the term "body position" includes a current state of the body part such as a current size, e.g. if a lung is in an expiratory state or in an inspiratory state. The recording of a medical image can be executed with a method typical for medical applications like a MRT-scan, a CT-scan or any other common radiology method. The first reference data set and/or the second reference data set might a blood pressure, data from an electrocardiogram (ECG) or a picture of the contour, in particular a 3D-picture, of a torso of the patient.

Preferably, the body part is a part of a human body or in detail, an inner body part, such as a specific organ of a human body, or the complete body of a patient. In particular, it is provided, that several medical images are recorded during the first time interval, wherein each medical image contains information about the position of the body part. Correlating the medical image of the body part with the first reference data set connects a specific aspect of the first reference data set to a specific medical image or information extracted from the medical image, for example. Therefore, the position of the body part can be determined in correspondence with the second reference data set. In particular, the positon of the body part relative to any other body part of a patient and/or relative to the surface of a patient and/or relative to the device, which is acquiring data from a patient, can be predicted based on the second reference data set and the learned correlation.

The term "correlating" includes establishing a link between the position of the body part and potential second reference data sets. That means: Due to the correlation it is possible to measure a second reference data set that might be similar to the first data set or to a subset of the first data set, and predict the actual position without the need that the first data set and the second reference data set are identical. In other words: by correlating the system learns to predict the current position of the body part depending on the second reference data set.

In a preferred embodiment the correlation of the medical image, for example a 3D-MRT-scan, with the first reference data set, e.g. a 3D-picture, generates a further coordinate system. The further coordinate systems is able to define a point of the body part with a measuring accuracy in a range of ± 0-10mm, preferred ± 0-5mm. With the help of the further coordinate system complex structures, for example a 3D-model of a body part, can be described in detail and high resolution.

Advantageously, a second reference data set is recorded with the same technique as the first reference data set has been recorded, or in other words the same method is used for recording the first and second reference data sets. The second reference data set is recorded without a simultaneous recording of medical images. Therefore, a device for acquiring medical images is not needed to record a second reference data set. Alternatively, the second reference data set can be acquired with a different technique than the first reference data set has been acquired. In a preferred embodiment the first and second reference data sets are comparable in regard to the measured values, for example by laying the patient into the same positon when the first and/or second reference data set is recorded.

The prediction of the current position of the body part is based on the second reference data set and the correlation of the medical image with the first reference data set. In other words, the correlation of the medical image of the body part and the first reference data set is applied on the second reference data set and thereby the current position of the body part is predicted. The current position of the body part is therefore only a virtual assumption, for example a 2D- or 3D-model, of the position of the body part. The advantages of this embodiment is that the position of the body part can be predicted and described in the form of a 3D-model, which reduces the effort of a following treatment.

The first and/or second reference data set can comprise multiple data sets which are recorded with two or more recording techniques, e.g. an ECG-recording and a 3D camera-scan which are recorded and forming a first and/or second reference data set.

Particularly advantageous embodiments and features of the inventionare given by the dependent claims, as revealed in the following description. Features of different claim categories may be combined as appropriate to give further embodiments not described herein.

According to a preferred embodiment, it is provided that a current state of a patient is classified by the first reference data set and/or by the second reference data set. For example, the first reference data and/or the second reference data set are able to classify a current position of the patient, a current respiratory state, a current blood pressure and/or a current orientation of the patient. Thus, it is possible to establish a link between the position of the body part in the first time interval and the current state of the patient. When the second reference data set indicates that the patient is in the state of the first time interval, it is possible to associate the position of the body part in the first time interval to the specific state of the patient in the second time interval.

In an exemplary embodiment the medical image is recorded by using a CT-device and during the CT recording a first reference data set is recorded, e.g. by an ECG-device. After recording the medical image and the first reference data set, the CT image and the ECG measurement points are correlated. The correlation establishes a link between the position of the body part and the CT image and the ECG measurement points. In another set-up, e.g. in a ward for radiation treatment, a second reference data set is recorded, e.g. via an ECG-device. By means of the ECG, the current position of the body part can be predicted based on the ECG measurement point, and the correlation of the first reference data set and the medical image, e.g. a CT-scan of the body part, which is e.g. a lung, and the first reference data set.

Advantageously, it is provided that a movement of the body part and/or a contraction of the body part, e.g. a muscle contraction, is predicted. A movement of the body part can be predicted in relation to the device which records a medical image and/or in relation to the body of the patient. E.g. when a lung is examined, the lung can move inside the body of the patient into several directions. Also the contraction of the lung influences the position of the body part. The benefit is that a radius or a contour of the irradiation treatment can be reduced and/or customized to the current position of the body part and thereby reduces radiation influencing the patient.

Gainfully, it is provided that arrhythmic movements, e.g. caused by bladder filling, are included in the prediction of the current position of the body part. Arrhythmic movements can influence the position of the body part relative to a measuring device. To further improve the accuracy of the prediction of the body part arrhythmic movements are integrated in the prediction of the current position of the body part. This embodiment has the positive effect of reducing the amount of radiation exposed to which the patient is exposed by minimizing the area of radiation treatment.

In a preferred embodiment it is provided that a lateral movement and/or small position changes, which influence the position of the body part relative to a medical measurement device, are integrated into the prediction of the current position of the body part. The term "lateral movements" are all kind of movements, which change the position of the patient, all movements, which occur due to a change of the patient being in relation to the medical measuring device or movements to different positions of the patient between the recording of the first and second reference data set. Small position changes, which influence the position of the body part, are tracked in all three directions in view of the pending irradiation therapy. All the lateral movements are integrated into the prediction of the current position of the body part to reduce the amount of radiation, to which the patient is exposed during the irradiation therapy.

Advantageously, it is provided, that the prediction and/or correlation of the current position of the body part is performed by an artificial neuronal network. In other words, an artificial neuronal network is configured to execute the prediction of the current position of the body part, which is examined. Furthermore, an artificial neuronal network comprises every form of neuronal computation. The advantage of this embodiment is that not a user, e.g. a radiologist, needs to ratify all data, which is acquired by the method. This is a huge saver in time and costs for the treatment of e.g. irradiation.

Advantageously, it is provided, that the movement of the body part is associated by the artificial neuronal network. In other words, the artificial neuronal network correlates the medical image of the body part with a first reference data set. The artificial neuronal network predicts automatically the movement of the body part according to the second reference data based on the correlation of the medical image of the body part and the first reference data set. The artificial neuronal network thereby generates a virtual copy of the body part and/or body and predicts movements of the current position of the body part and/or body and also potential future movements of the body part and/or body. This embodiment generates the advantage that a further medical device can be controlled with the help of the artificial neuronal network, e.g. an irradiator, and thereby the irradiation therapy can be optimized regarding the radiation. E.g. the artificial neuronal network supervised the movement of a lung and thereby can predict the movement of the body part only with the input of the second reference data set.

In a preferred embodiment it is provided, that a machine learning mechanism is used by the artificial neuronal network. In this embodiment, the machine learning mechanism is every form of computer learning, especially all mechanisms regarding the topic of machine learning. The advantage of this embodiment is that the artificial neuronal network develops itself and thereby reduces drastically the amount of time and costs, which have to be invested for a comparable system in maintaining and further developing the system without an artificial neuronal network.

Beneficially, it is provided, that a deep-learning mechanism is used by the artificial neuronal network. The deep-learning mechanism is in this embodiment any form of machine learning algorithm that is used for a cascade of multiple layers of non-linear processing or multiple levels of processing or of a broader machine learning field or if a multiple level representation of different abstraction levels. Preferably, a deep-learning mechanism is any form of supervised or unsupervised learning algorithm.

Preferably, it is provided that the predictions are used by the artificial neuronal network to improve further the accuracy of the prediction of the current positions of the body part. The term "accumulated predictions" is preferably a sum or any other form of input which results in a better accuracy for the prediction of the current position of the body part. Typically, the artificial network collects all predictions of the current positions of all previously examined body parts and learns unsupervised, what results in a higher accuracy of a future prediction of the current position of the body part. Improving the accuracy means adapting itself depending on the input, for correlating and predicting movements of the body part.

Preferably, it is provided that the first and the second reference data sets are recorded with the same technique. Furthermore, the same technique comprises the same combination of techniques, e.g. the combination of ECG and 3D cameras. In an alternative form of this embodiment the same technique comprises a combination of e.g. an ECG and 3D cameras, wherein the first reference data set is used although only the ECG has been acquired. This leads to a higher applicability, e.g. when a medical ward is only equipped with one form of a medical measurement system.

Beneficially it is provided that the prediction of the current position of the body part is transferred to a computer device and/or a display. In other words, the result of the prediction of the current position of the body part is transferred to a computer device or a display. The term "transfer" means preferably that an information is communicated via a wired or wireless connection.

In a preferred embodiment it is provided that the prediction of the current position of the body part is used to control a further medical device, especially an irradiator-device. A further medical device is in this embodiment any device, which benefits by receiving the current position of the body part. The advantage of this embodiment is that therapies which use a further medical device are optimized with respect to the current position of the body part.

In a preferred embodiment a computer program with program code sections, which induce a computer to execute the method steps, when the computer programme is run on a computer. The computer programme is in any form which is run on an operating system. Additionally, the computer programme can be stored on any device, especially on a hard disc or a network space. In a further embodiment, the computer programme is executed on a local PC, a server or a cloud platform.

In a further embodiment of the invention a storage device is provided, into which the computer programme is stored, wherein the storage device is a stationary storage device, e.g. like a hard disc, a solid state drive or a magnetic tape and/or a mobile storage device, e.g. a CD ROM, a DVD or a USB stick and/or a network storage device, e.g. a net storage and/or a cloud storage. In a preferred embodiment the storage device is a combination of the just listed devices.

In preferred embodiment a system is provided, which is configured to record a medical image of a body part and a first reference data set and to correlate the medical images of the body part with the first reference data set, wherein the system is configured to record a second reference data set and to predict a current position of the body part based on the second data set and the correlation of the medical image of the body part and the first reference data set Another aspect of the present invention is a computer program product for carrying out the steps of the method according to the present invention, when the computer program product is loaded into a memory of a programmable device.

A further aspect of the present invention is a system being configured for
- recording a medical image of a body part and a first reference data set, and
- correlating the medical image of the body part with the first reference data set,
wherein the system is configured to record a second reference data set and to predict a current position of the body part based on the second reference data set and the correlation of the medical image of the body part and the first reference data set. The system comprises any form of combination of the following devices and/or techniques and/or methods:
- electrocardiogram,
- respiration belt
- 3D camera
- optical markers and reflectors
- radar system
- supersonic emitter
- implanted or glued HF-transponder
- distance measurement
- fiducial marker
- magnetic resonance tomography
- computer tomography
- positron emission tomography
- x-ray
- echocardiography
- sonography.

The invention will now be illustrated with reference to nonlimiting figures and embodiments according to the invention.
- Fig. 1: shows a schematic first embodiment of the method according to this invention,
- Fig. 2: shows a schematic second embodiment of the system according to this invention,
- Fig. 3: shows a schematic third embodiment of the system according to this invention.

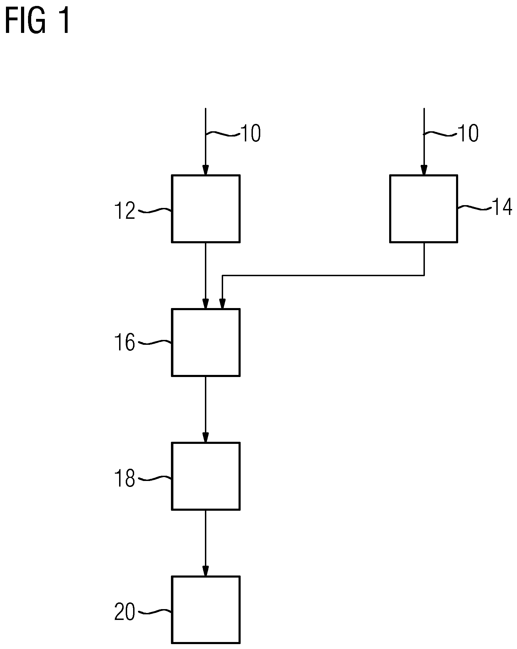

Fig. 1 shows a schematic sequence of steps according to this invention, which can be executed in this order or in any other order, which can result of the combination of the different steps. The method is started by a trigger 10 for example a user interaction, which triggers the synchronized recording of a medical image 12 and the recording of the first reference data 14. When recording the medical image 12 or several medical images and recording the first reference data are completed, the medical image and the first reference data set 16 are correlated. Immediately, or with a time gap between a few minutes and a very long time in view of several months a second reference data set 18 is recorded. Beneficially the prediction of the current position of the body part 20 is executed simultaneously to the recording of the second reference data set 18 or with a very short time delay, e.g. less than 1 second.

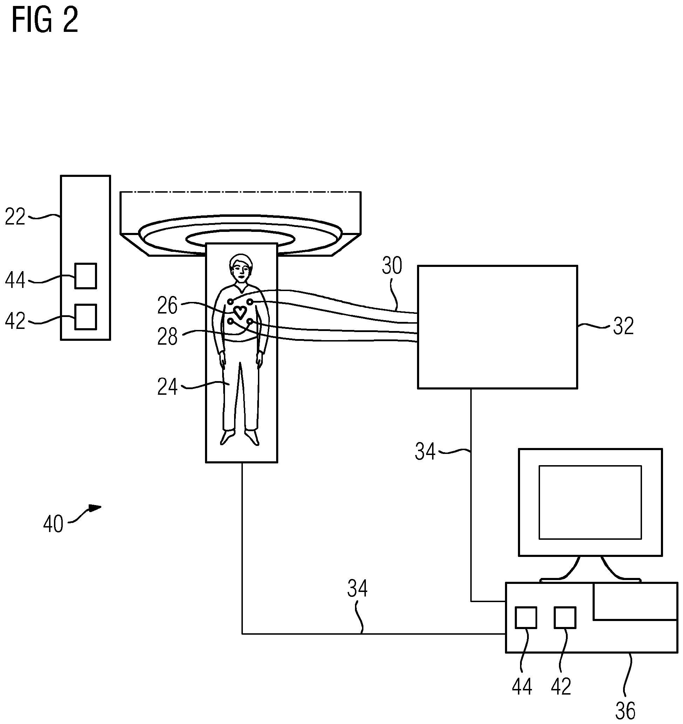

Fig. 2 shows a schematic view of a system 40. The MRT 22 comprises a storage device 42 and a processing unit 44, which can execute the method. A patient 24 with a body part 26, in this example a heart, is lying in the MRT-device. An ECG unit 32 is connected by cables 30, which connect the ECG sensors 28 with the ECG unit 32. The ECG sensors 28 supervise the body part 26. The ECG unit 32 is connected to a PC 36 with a connection cable or a wireless connection 34. The PC 36 comprises a storage device 42 and/or a processing unit 44. In a preferred embodiment the MRT 22 is connected with the PC 36 via a wired or wireless connection 34.

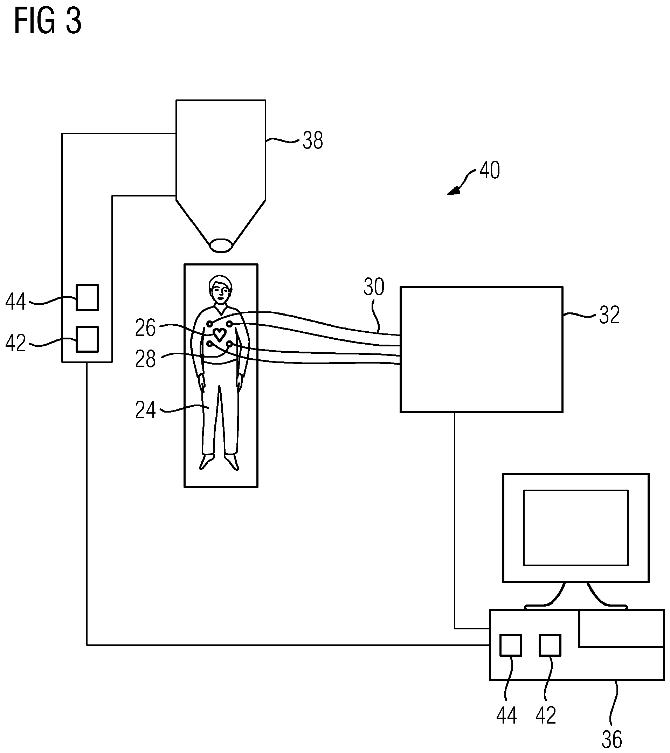

Fig. 3 shows an alternative embodiment of the invention. The system 40 comprises a radiator 38, a patient 24, an ECG unit 32 and a PC 36. The patient 24 is connected with several ECG sensors 28, which are connected to the ECG unit 32 with a wired or wireless connection 30. The ECG unit 32 records a second reference data set, which is used to predict the current and/or future position of a body part 26. The ECG unit is connected to a PC 36 with a wired or wire-less connection. The PC 36 comprises a storage device 42 and a processor unit 44. The irradiator also comprises a storage device 42 and processor unit 44, and the irradiator 38 is connected to the PC 36 by a wired or wireless connection. The PC 36 is configured to control the irradiator 38 with information generated according to the inventively method.

## Claims

1. Method for predicting (20) a current position of a body part (26) comprising the steps:
∘ recording a medical image (12) of the body part (26) and a first reference data set (14) in a first time interval,
∘ correlating (16) the medical image (12) of the body part (26) and the first reference data set (14),
∘ recording a second reference data set (18) in a second time interval and
∘ predicting (20) the current position of the body part (26) in the second time interval based on
- the second reference data set (18) and
- the correlation of the medical image (12) of the body part (26) and the first reference data set (14).

2. Method according to claim 1, wherein a current state of a patient is classified by the first reference data set (14) and/or by the second reference data set (18).

3. Method according to one of the preceding claims, wherein a movement of the body part (26) and/or a contraction of the body part (26), for example a muscle contraction, is predicted.

4. Method according to one of the preceding claims, wherein arrhythmic movement of the body part are predicted.

5. Method according to one of the preceding claims, wherein lateral movements and/or small position changes which influence the position of the body part (26) are integrated in the prediction (20) of the current position of the body part (26).

6. Method according to one of the preceding claims, wherein the prediction (20) of the current position of the body part (26) is performed by an artificial neuronal network.

7. Method according to claim 6, wherein the movement of the body part is learned by the artificial neuronal network.

8. Method according to claim 6 and 7, wherein a machine learning mechanism is used by the artificial neuronal network.

9. Method according to claim 6 - 8, wherein a deep learning mechanism is used by the artificial neuronal network.

10. Method according to claim 6 - 9, wherein the predictions (20) of the current position of the body part (26) are used by the artificial neuronal network to improve the accuracy of the prediction (20) of the current positions of the body part (26).

11. Method according to one of the preceding claims, wherein the first (14) and second reference data set (18) are recorded with the same technique.

12. Method according to one of the preceding claims, wherein the prediction (20) of the current position of the body part (26) is transferred to a computer device (36) and/or a display.

13. Method according to one of the preceding claims, wherein the prediction (20) of the current position of the body part (26) is used to control a further medical device (38), especially an irradiator.

14. Computer program product for carrying out the steps of the method according to any of the claims 1 to 13, when the computer program product is loaded into a memory of a programmable device.

15. System (40) being configured for
- recording a medical image (12) of a body part (26) and a first reference data set (14), and
- correlating (16) the medical image of the body part (12) with the first reference data set (14), wherein the system (40) is configured to record a second reference data set (18) and to predict (20) a current position of the body part (26) based on the second reference data set (18) and the correlation (16) of the medical image (12) of the body part (26) and the first reference data set (14).

## Amended claims

### Amended claims in accordance with Rule 137(2) EPC.

1. Method for predicting (20) a current position of a body part (26) comprising the steps:
∘ recording a medical image (12) of the body part (26) and a first reference data set (14) in a first time interval,
∘ correlating (16) the medical image (12) of the body part (26) and the first reference data set (14),
∘ recording a second reference data set (18) in a second time interval and
∘ predicting (20) the current position of the body part (26) in the second time interval based on
- the second reference data set (18) and
- the correlation of the medical image (12) of the body part (26) and the first reference data set (14), wherein the prediction (20) of the current position of the body part (26) is performed by an artificial neuronal network.

2. Method according to claim 1, wherein a current state of a patient is classified by the first reference data set (14) and/or by the second reference data set (18).

3. Method according to one of the preceding claims, wherein a movement of the body part (26) and/or a contraction of the body part (26), for example a muscle contraction, is predicted.

4. Method according to one of the preceding claims, wherein arrhythmic movement of the body part are predicted.

5. Method according to one of the preceding claims, wherein lateral movements and/or small position changes which influence the position of the body part (26) are integrated in the prediction (20) of the current position of the body part (26).

6. Method according to one of the preceding claims, wherein the movement of the body part is learned by the artificial neuronal network.

7. Method according to one of the preceding claims, wherein a machine learning mechanism is used by the artificial neuronal network.

8. Method according to one of the preceding claims, wherein a deep learning mechanism is used by the artificial neuronal network.

9. Method according to one of the preceding claims, wherein the predictions (20) of the current position of the body part (26) are used by the artificial neuronal network to improve the accuracy of the prediction (20) of the current positions of the body part (26).

10. Method according to one of the preceding claims, wherein the first (14) and second reference data set (18) are recorded with the same technique.

11. Method according to one of the preceding claims, wherein the prediction (20) of the current position of the body part (26) is transferred to a computer device (36) and/or a display.

12. Method according to one of the preceding claims, wherein the prediction (20) of the current position of the body part (26) is used to control a further medical device (38), especially an irradiator.

13. Computer program product for carrying out the steps of the method according to any of the claims 1 to 13, when the computer program product is loaded into a memory of a programmable device.

14. System (40) being configured for
- recording a medical image (12) of a body part (26) and a first reference data set (14), and
- correlating (16) the medical image of the body part (12) with the first reference data set (14), wherein the system (40) is configured to record a second reference data set (18) and to predict (20) a current position of the body part (26) based on the second reference data set (18) and the correlation (16) of the medical image (12) of the body part (26) and the first reference data set (14).
